# EUROPEAN PATENT SPECIFICATION

(11) **EP 4 007 320 B1**
(45) Date of publication and mention of the grant of the patent: **16.08.2023**
(21) Application number: 21171878.8
(22) Date of filing: 03.05.2021
(51) Int. Cl.: H04W 4/46

(54) **VEHICLES WIRELESS BACKHAUL SYSTEM**
DRAHTLOSES BACKHAUL-SYSTEM FÜR FAHRZEUGE
SYSTÈME DE LIAISON TERRESTRE SANS FIL DE VÉHICULES

(30) Priority: 27.11.2020 EP 20306462
(43) Date of publication of application: 01.06.2022
(73) Proprietor: BULL SAS, 78340 Les Clayes-Sous-Bois (FR)
(72) Inventor: PISON, Laurent, 91940 Les Ulis (FR)
(74) Representative: Cabinet Camus Lebkiri

(56) References cited:
- EP-A1- 3 167 683
- WO-A1-2016/007937
- SA1 (FROM S1-203292): "New SID: Study on vehicle-mounted relays (FS_VMR)", 3GPP DRAFT; SP-200798, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG SA, no. Electronic Meeting; 20200915 - 20200921 9 September 2020 (2020-09-09), XP051933547, Retrieved from the Internet: URL:https://ftp.3gpp.org/tsg_sa/TSG_SA/TSG s_89E_Electronic/Docs/SP-200798.zip SP-200798_S1-203292_FS_VMR.doc [retrieved on 2020-09-09]

## Description

### TECHNICAL FIELD

The technical field of the invention is the field of telecommunications.

The present document concerns a wireless backhaul system for vehicles and in particular a system to enable a vehicle to provide a backhaul link to a fixed network to another vehicle.

### STATE OF THE ART

In order to achieve wireless backhaul between vehicles, it is necessary to add 4G or 5G type resources which in terms of radio can quickly interfere or become complex to manage. The main problem is to be able to provide a solution where the fixed network and the network in the vehicles cannot be delivered by the same supplier, and therefore must use the highest possible IP interoperability (in the TCP / IP sense) and 3GPP standard. On the other hand, a network between vehicles and in vehicles is delivered by a single supplier and this is what the present invention seeks to cover.

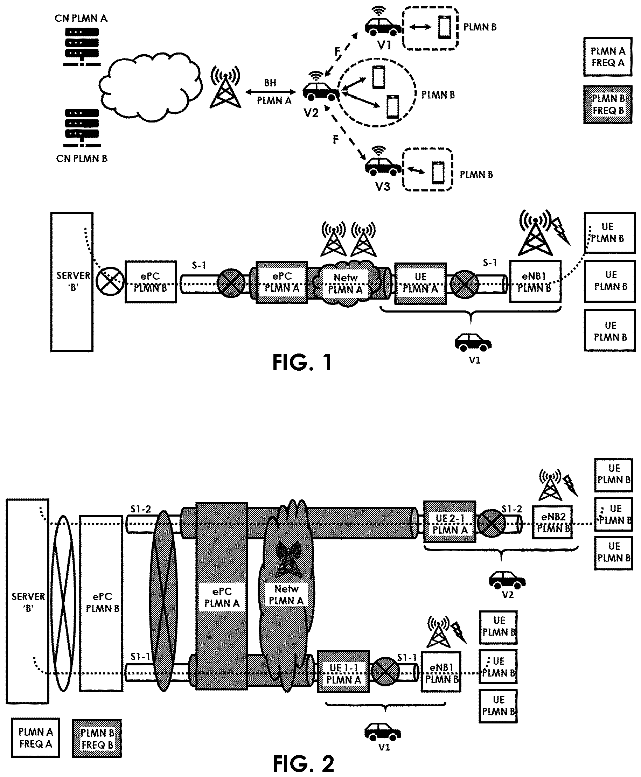

Figure 1 shows a schematic representation of a known system for providing a backhaul link to a fixed network by a vehicle to a plurality of user terminals. In the rest of the document, the terms "user terminal" refers to any device that can also be referred to by the standard terms "user equipment" in 3G UMTS, 4G LTE and 5G NR.

As represented at figure 1, it is needed to cover user terminals belonging to PLMN B from vehicles v1 to v3 with local coverage and to backhaul these vehicles with the backhaul "BH PLMN A". It is understood by "backhaul" one or several links between the network core and the edge sub-networks. "PLMN" is understood to mean "public land mobile network", but the invention applies to any mobile network.

As represented in the schematic representation at the bottom of Figure 1, it is required a solution to setup a local eNodeb (i.e. a base station in Long Term Evolution networks) PLMN B setup, with a "S" (*) interface supported via a backhaul BH PLMN A which can be a tunnel such as an IP (Internet Protocol) tunnel. A "S(*)" interface can be for example a S1 and or X2 3GPP interfaces. But for simplification, it is called "S" interface. At least part of the represented tunnels on all of the figures of the present disclosure are bearers when in LTE networks.

The core network "PLMN B ePC" (evolved Packet Core in Long Term Evolution networks) of the first mobile network PLMN B is only accessible by user terminals of the first mobile network PLMN B in series via the core network "PLMN A ePC" of the second mobile network PLMN A, that is the core network "PLMN A ePC" of the first network PLMN A is accessible via the core network "PLMN B ePC" of the second network PLMN B, via a tunnel such as an IP tunnel. The core networks in the schematic representation at the top of Figure 1 are named "CN PLMN A" and "CN PLMN B". Reference will be made interchangeably to "ePC PLMN X" or to "PLMN X ePC", X being the letter of the PLMN.

Figure 2 shows a schematic representation of a known system for providing a backhaul link to a fixed network by two vehicles to a plurality of user terminals.

In this embodiment, two backhaul links are to be provided, one for vehicle v1 and one for vehicle v2. Each vehicle v1 and v2 has a dedicated S interface S1-1 or S1-2 which are backhauled by dedicated tunnels via the mobile network PLMN A, the mobile network PLMN A comprising a core network PLMN A ePC and user terminals UE 1-1 and UE 2-1. Each of the vehicles v1 and v2 comprises the user terminal of the backhaul network PLMN A and the base station eNodeB eNB1 or eNB2 of the mobile network PLMN B. The user terminals of PLMN B wishing to access the core network ePC of the network PLMN B can therefore connect to the eNodeB base station eNB1 or eNB2 onboard the vehicle v1 or v2, and access the core network PLMN B ePC via the backhaul network PLMN A.

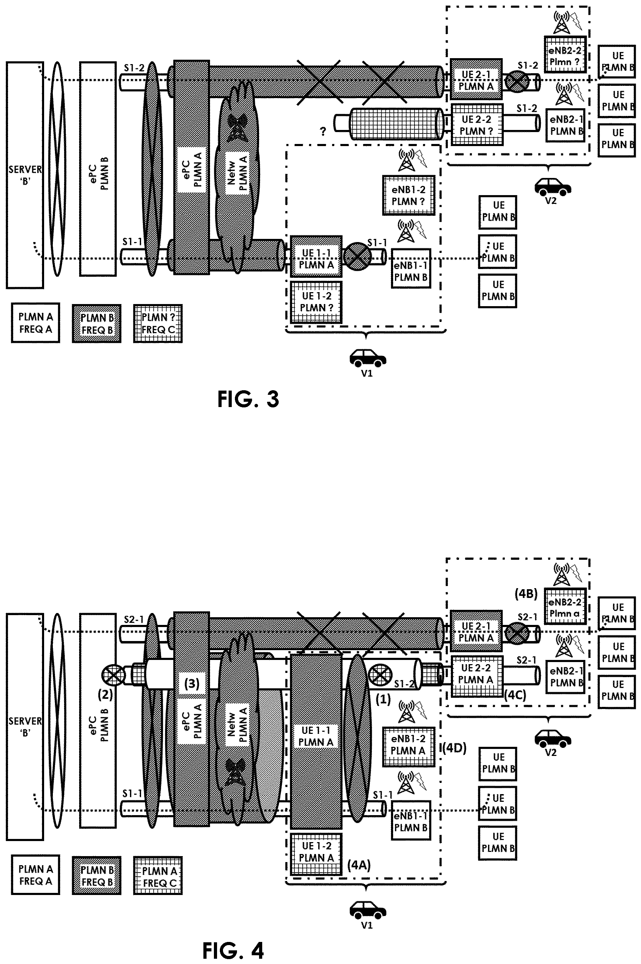

Figure 3 shows a schematic representation of a problem that arises in a system for providing a backhaul link to a fixed network by two vehicles to a plurality of user terminals.

It is to be noted that parts of the network infrastructure are not provided in the figures. Only the vehicle infrastructure is provided, comprising at least a UE and an eNodeB base station. Some gateways may be comprised in the infrastructure, but outside of the ePC, HSS and Server 'B' that have a different provider.

The problem represented at Figure 3 in grid pattern filling is, when in addition to what was described previously, a request to support vehicle v2 with its user terminals UE via the grid pattern filling tunnel backhaul and via vehicle v1 is requested.

To solve this problem several solutions can be investigated:
- By adding an additional stream (S1-2) to route data from user terminals via vehicle v1: as far as possible any vehicle needs to be 'symmetric' in order to be able to support a backhaul for another vehicle or being supported as backhaul, meaning that eNodeB base stations eNB2-2 and eNB1-2 are added in figure 3 as compared to figure 2.
- By adding an additional frequency: it requires an additional cell at eNB1 with different frequencies and a specific routing at eNB1 for that terminal, but it is quite difficult. Two solutions as well as their drawbacks will be developed in the following figures: via PLMN A and via PLMN B.
- how can the flows S1-1 and S1-2 be segregated at the entry and at the outside of the hashed filling backhaul tunnel within the vehicle v1 and on the network side?
- how to avoid the interferences of UE2-2 with eNB2-2, and of UE1-2 with eNB1-2? And how to avoid connection of grid pattern filling UEs to local eNodeB base stations eNBs?

These questions are not answered in the state of the art and several solutions will be investigated in the following figures.

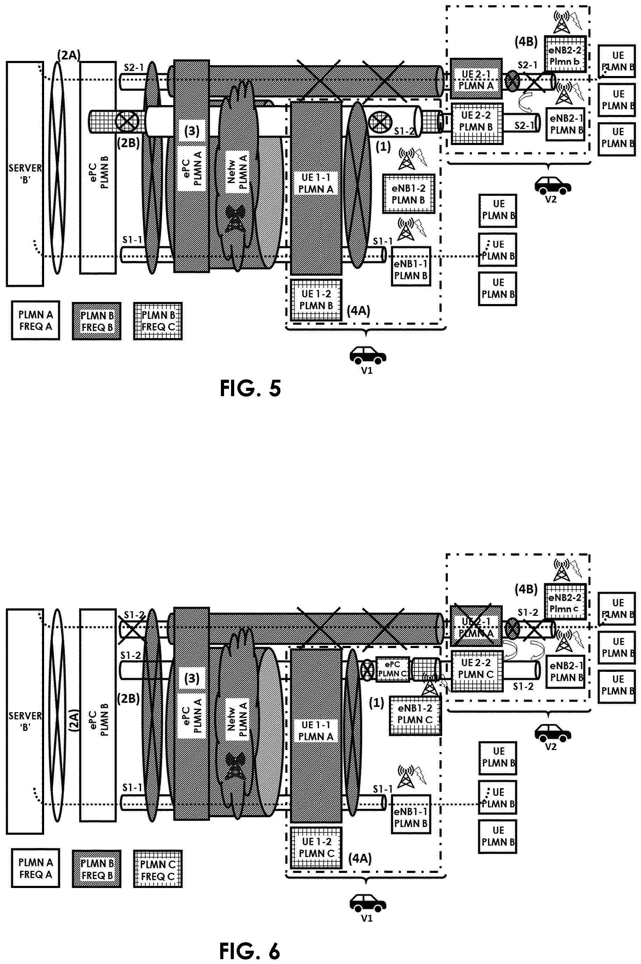

Figure 4 shows a schematic representation of a system using PLMN A to provide between-vehicles backhaul. When issues are discussed, reference is made to numbers in parenthesis. The numbers in parenthesis in figure 5 permit to locate the discussed issues in the system. It is understood by "using PLMN A to provide backhaul" that the UE2-2, UE1-2, eNB2-2 and eNB1-2 belong to PLMN A. In particular, that eNB1-2 belonging to PLMN A in vehicle v1 is used to provide backhaul to vehicle v2 which comprises UE2-2 belonging to PLMN A.

In that case, several drawbacks appear. First, it requires an additional cell (eNB1-2 and eNB2-2) belonging to PLMN A to be managed at each vehicle, only for that mechanism. As shown at reference (3), it is needed for the user terminal UE2-2 to be ended with PLMN A, i.e. with an ePC belonging to PLMN A (as for UE 1-1). As shown at reference (1), it is also needed to be able to identify the flow of this new user terminal UE2-2 at vehicle v1 and not to mix that flow with S1-1. As shown at reference (2), it is also needed to be able to segregate S1-1 and S1-2 flows at the core network PLMN B ePC and be able to un-tunnel twice S1-2 between the core networks PLMN A ePC and PLMN B ePC. As show at references (4a)(4b), there is the need of a solution to avoid respectively UE1-2 and UE2-2 not to try to attach to their own local eNodeb base stations (respectively eNB1-2 and eNB2-2) which have a very high signal available. As shown at reference (4c), a solution is needed to avoid radio "ping pong" effect if the signal comes back to UE2-2 from the PLMN A central network. As shown at reference (4d), a solution is needed to avoid a UE PLMN A to attach to eNB1-2, which is critical if PLMN A is a public network).

All these requirements imply a very high complexity of the gateways at reference points (1) and (2). The issues at reference points (4a)(4b) require specific radio mechanisms for cutting the radios of UE1-2 and eNB2-2 if PLMN A is managed inside vehicles. At reference (4d), the public network UEs may overflow eNB1-1 without any way to support or filter them properly. Therefore, using PLMN A to provide between-vehicles backhaul is not the best solution available.

Figure 5 shows a schematic representation of a system using PLMN B to provide between-vehicles backhaul. When issues are discussed, reference is made to numbers in parenthesis. The numbers in parenthesis in figure 5 permit to locate the discussed issues in the system. It is understood by "using PLMN B to provide backhaul" that the UE2-2, UE1-2, eNB2-2 and eNB1-2 belong to PLMN B. In particular, that eNB1-2 belonging to PLMN B in vehicle v1 is used to provide backhaul to vehicle v2 which comprises UE2-2 belonging to PLMN B. An advantage is that it solves the UE PLMN A attachment issues (issue (4d) at Figure 4), but some problems remain.

First, as for using PLMN A, it requires an additional cell (eNB1 -2 and eNB2-2) with the same PLMN to be managed at each vehicle, only for that mechanism. As shown at reference (1), it is also needed to be able to identify the flow of the new user terminal UE2-2 at vehicle v1 and not to mix that flow with S1-1. As shown at references (2a) and (2b) it is needed to be able to segregate the flow of UE2-2 at the core network PLMN B ePC and to be able to un-tunnel between PLMN A ePC and PLMN B ePC, and beyond PLMN B ePC. As show at references (4a)(4b), there is the need of a solution to avoid respectively UE1-2 and UE2-2 to not try to attach to their own local eNodeb base stations (respectively eNB1-2 and eNB2-2) which have very high signal available. As shown at reference (4c), a solution is needed to avoid radio "ping pong" effect if the signal comes back to UE2-2 from the PLMN A central network.

All these requirements imply a very high complexity of gateways at reference points (1), (2a) and (2b). UE1-2 and eNB2-2 at reference points (4a) and (4b) require specific radio mechanisms for cutting their radio if PLMN B is managed inside the vehicles. Prior art is also disclosed in EP3167683 A1.

There is therefore a need for a solution to be able to provide between-vehicles backhaul without the drawbacks of the state of the art.

### SUMMARY OF THE INVENTION

The first aspect of the invention is thus a wireless backhaul system comprising at least two vehicles, and:
- A first mobile network (PLMN B) comprising at least one base station (eNB1, eNB2) onboard each vehicle, at least one user terminal (UE PLMN B), and at least one network core comprising a Home Subscriber Server (ePC PLMN B), the user terminal (UE PLMN B) being connected to the base station of the first mobile network,
- A second mobile network (PLMN A) comprising at least one user terminal (UE1-1, UE2-1) onboard each vehicle, at least one base station (Netw PLMN A), and at least one network core comprising a Home Subscriber Server (ePC PLMN A),
the network cores being accessible in series, the user terminal of the second mobile network (PLMN A) being connected to the base station of the first mobile network (PLMN B), the user terminal of the second mobile network (PLMN A) being connected to the network core (ePC PLMN A) of the second mobile network (PLMN A) via the base station (Netw PLMN A) of the second mobile network (PLMN A) to form a first backhaul link between the base station of the first mobile network (PLMN B) and the network core (ePC PLMN B) of the first mobile network (PLMN B), thereby enabling the user terminal connected to the base station (eNB1, eNB2) of the first mobile network (PLMN B) to operate over the first mobile network (PLMN B), the system further comprising :
- A third mobile network (PLMN C) comprising a base station (eNB1-2 PLMN C, eNB2-1 PLMN C) onboard each vehicle, a user terminal (UE 1-2, UE 2-2) onboard each vehicle and a local network core comprising a local Home Subscriber Server (ePC PLMN C) onboard each vehicle, the base station (eNB1-2 PLMN C, eNB2-2 PLMN C) of the third mobile network (PLMN C) of a vehicle being connected to the user terminal (UE1-1, UE2-1) of the second mobile network (PLMN A) of said vehicle via the local network core (ePC PLMN C) of the third mobile network (PLMN-C) of said vehicle, the local Home Subscriber Server being replicated or shared between the vehicles,
- each vehicle comprising switching means to switch between two operating modes:
   - a first operating mode being a relayed mode, where the user terminal of the first mobile network of the vehicle, the base station (eNB1-2 PLMN C, eNB2-2 PLMN C) of the third mobile network (PLMN C) of the vehicle and the local network core of the third network of the vehicle are deactivated,
   - a second operating mode being a relaying mode, where the user terminal of the third mobile network (PLMN C) of the vehicle is deactivated,
where the user terminal (UE1-2, UE2-2) of the third mobile network (PLMN C) of one vehicle in relayed mode of the two vehicles is connected to the base station (eNB1-2 PLMN C, eNB2-2 PLMN C) of the third mobile network (PLMN C) of the other vehicle in relaying mode of the two vehicles to form a second backhaul link between the base station of the third mobile network (PLMN C) of the vehicle in relayed mode and the network core of the second mobile network (PLMN A), thereby enabling the user terminal connected to the base station (eNB1, eNB2) of the first mobile network (PLMN B) of the other vehicle in relayed mode to access the first mobile network (PLMN B) via the first and second backhaul links.

The invention permits to logically separate the backhaul networks between vehicles with the network operated via the vehicle (PLMN B) and with the main backhaul (PLMN A) by an additional PLMN perfectly controllable in 3GPP technology by the equipments located on board the vehicles.

The invention permits to make the process symmetrical so that any vehicle can act as a backhaul relay or be backhauled by another vehicle. The solution of the invention can also be extended to backhaul multiple vehicles by one vehicle, if radio capacity available. The solution of the invention can also be extended to multi-hop by several PLMN C, C', C", ..., if the radio resources have strong enough capacity. (not represented)

The solution of the invention brings a solution to a new problem (both in 4G LTE and 5G) that is raised due to tactical and hybrid usage of networks. The invention also focuses on delivering an accessible solution that is located inside the vehicles and that does not need modification of the existing fixed systems. The invention uses standard IP and 4G elements and features, but the assembly, and the way of usage are far from standard 4G usage for telecommunications or tactical operations, where the whole network (ePC and eNB with their management) is delivered by the same provider. Thus, in the state of the art, proprietary solutions between infrastructure and radio part are not available. The invention answers with a simple manner to the objective.

Advantages of the invention are that it permits a simple and efficient separation of local stream and backhaul stream for other vehicles within the routing vehicle. It also allows for a simple and efficient backhaul of multiple vehicles from a single vehicle. Further, the operation within the routing vehicle with no routing or routing of multiple other vehicles is relatively transparent. The invention allows to separate classic central infrastructure and provider with the inside vehicle solution and provider. The interoperability becomes 'natural'. Depending on the radio (and spectrum available) on eNB1-2, this can be extended to multiple vehicles backhaul by a single vehicle. The capacity of UE1-1 in PLMN A is also a factor. Furthermore, any vehicle can take the role of relaying when the radio condition or operation changes.

The system according to the invention may also have one or more of the following characteristics, considered individually or according to any technically possible combinations thereof:
- the switching means are switched depending on a detection of loss of network connectivity of the user terminal of the first network of a vehicle of the two vehicles. This permits an automatic switching of network.
- the switching means are a computer-implement switching method or a hardware switch with or without a human or manual procedure of assessment. This permits to give the user a simple solution to switch between two functioning modes. The presence of a hardware switch gives the user a simple and safe solution, easily understandable and maintainable.

- the first and second networks are chosen from 3G, 3G+, 4G or 5G, and in that the third network is chosen from 3G, 3G+, 4G, 5G or Wi-Fi with 3GPP authentication network.
- the network core of each of the three networks further comprises a Serving Gateway, a Packet Data Network Gateway and a Mobility Management Entity. This permits to implement known components in a new way, therefore making the invention accessible and easily applicable.
- the Home Subscriber Server of the local core network of the third network of a vehicle of the two vehicles is configured not to store information about the user terminal of the third mobile network of said vehicle or to store information about the user terminal of the third mobile network of said vehicle with a "deactivated" database status. This permits to manage the User Equipment belonging to PLMN C inside the vehicle from the Home Subscriber Server of the fixed network rather than from inside the vehicle.
- the third mobile network uses the same frequency as the first mobile network. This permits to implement functions such as Ran sharing to direct S1-1 and S1-2 flows, to provide direct routing towards the core network ePC of the PLMN B.
- the base station of the second network accepts user terminals of the second and third networks using a ran sharing principle.
- the user terminal of the first network and the user terminal of the third network are subscriber identification modules comprised in a single user terminal, the network to attach to being managed via a content of the subscriber identification modules. This permits to implement the invention in a single user terminal inside each vehicle.
- the system comprises more than two vehicles and in that one of the vehicles is in a relaying mode and the other vehicles are in relayed mode, the communications of the user terminals of the first mobile network attached to the other vehicles being relayed by the vehicle in relaying mode.
- the system comprises at least a fourth network with the same components as the third mobile network and a supplementary network identifier (PLMN C') so as to enable a between-vehicle multi-hop relaying mode. This permits to provide between-vehicles backhaul with several hops, for example when radio capacities are not strong enough or when the reach of the radio network has to be extended.

### BRIEF DESCRIPTION OF THE FIGURES

Other characteristics and advantages of the invention will become clear from the description that is given thereof below, by way of indication and in no way limiting, with reference to the appended figures, among which:
- Figure 1 is a schematic representation of a known system for providing a backhaul link to a fixed network by a vehicle to a plurality of user terminals,
- Figure 2 is a schematic representation of a known system for providing a backhaul link to a fixed network by two vehicles to a plurality of user terminals,
- Figure 3 is a schematic representation of problems that arise in a system for providing a backhaul link to a fixed network by two vehicles to a plurality of user terminals when between-vehicles backhaul is further required,
- Figure 4 is a schematic representation of a system using PLMN A to provide between-vehicles backhaul,
- Figure 5 is a schematic representation of a system using PLMN B to provide between-vehicles backhaul,
- Figure 6 is a schematic representation of a wireless backhaul system according to the invention,
- Figure 7 is a schematic representation of a wireless backhaul system according to an embodiment of the invention.

### DETAILED DESCRIPTION

The following glossary is provided, as abbreviations are used in the whole document:
- UE: User Equipment,
- ENB: eNodeB,
- HSS: Home Subscriber Server,
- MME: Mobility Management Entity,
- SGW: Serving Gateway,
- PGW: Packet Data Network Gateway,
- PLMN: Public Land Mobile Network,
- IP: Internet Protocol,
- 3GPP: 3^{rd} Generation Partnership Program,
- EPC: Evolved Packet Core,
- 3G, 4G and 5G: 3^{rd} Generation, 4^{th} Generation and 5^{th} Generation of wireless mobile telecommunications technologies,
- IMSI: International Mobile Subscriber Identity,
- SIM: Subscriber Identification Mobile,
- RAN: Radio Access Network,
- TCP: Transmission Control Protocol,
- IP: Internet Protocol,
- GW: Gateway.

For greater clarity, identical or similar elements are marked by identical reference signs in all of the figures.

The figures are provided for information purposes only and are in no way limiting the invention to their disclosure.

Figure 6 is a schematic representation of a wireless backhaul system according to the invention.

The invention is described with mobile networks being PLMNs (Public Land Mobile Networks) but the invention is not limited to PLMNs and applied to any kind of mobile network.

In the system represented at Figure 6, a first network PLMN B is provided. This first network comprises a core network PLMN B ePC giving access to its user terminals "UE PLMN B" to data provided by a server b via base stations eNB1 and eNB2 such as eNodeB base stations, the base stations eNB1-1 and eNB2-1 being respectively on-board a first vehicle v1 and a second vehicle v2. The user terminals of the first network PLMN B "UE PLMN B" are connected to at least one eNodeB base station of the first network PLMN B eNB 1-1 or eNB2-1 on-board the vehicles respectively v1 and v2.

A backhaul link is provided between the network core PLMN B ePC and the base stations of the first network PLMN B on-board vehicles v1 and v2 via a second network PLMN A. This second network comprises a network core PLMN A ePC as well as a network part Netw PLMN A comprising at least one base station (not represented) such as an eNodeB base station. The second network PLMN A further comprises user terminals UE1-1 and UE2-1 on-board the vehicles v1 and v2 respectively. The interfaces S1-1 and S1-2 are S interface bearers between user terminals UE of the first network PLMN B and the network core ePC of the first network PLMN B. The tunnels in hashed filling are bearers of the second network PLMN A between user terminals UE1-1 and UE 2-1 of the second network PLMN A and the network core ePC of the second network PLMN A. The figures further comprise crossed circles and/or crossed ovals which represent gateways or IP routers between the networks and have no reference in the drawings. Therefore, it is understood by "an entity is connected to another entity" when the entities belong to different networks that the entities are connected via at least one gateway.

The network cores of the first network PLMN B ePC and of the second network PLMN A ePC are accessible in series via the different tunnels represented and via at least one gateway between the two core networks PLMN A ePC and PLMN B ePC. The user terminals respectively UE1-1 and UE2-1 of the second network PLMN A are initially connected to the base stations respectively eNB1-1 and eNB2-1 of the first mobile network PLMN B via at least one gateway.

In the invention, the user terminal UE2-2 is part of PLMN C, a third mobile network dedicated to between-vehicles backhaul. The system according to the invention comprises an additional cell (i.e. a base station) respectively eNB1-2 and eNB2-2 with PLMN C to be managed within each vehicle respectively v1 and v2, only for that mechanism. The invention therefore adds a third network PLMN C, acting as a between-vehicles backhaul network only. Therefore, the core networks of the third network PLMN C are on-board the vehicles, as well as the base stations and the user terminals.

The third mobile network PLMN C can be chosen from 3G, 3G+, 4G, 5G or Wi-Fi with 3GPP authentication network, whereas the first PLMN B and second PLMN A networks can be chosen from 3G, 3G+, 4G or 5G networks. It is understood by "WI-FI with 3gpp authentication" a wi-fi network with 4G based or 5G based authentication possible as offered in 3GPP standards where 4G/5G is over wifi.

In an embodiment with only two vehicles such as figure 6, the vehicle v1 comprises a core network PLMN C ePC, a base station eNB1-2 PLMN C and a user terminal UE1-2 PLMN C. The vehicle v2 comprises the same components as the invention can be symmetric for the vehicles, with one of the two vehicles acting as relaying or being relayed via the other vehicle. Therefore, the vehicle v2 comprises a core network PLMN C ePC (not represented), a user terminal UE 2-2 PLMN C, and a base station eNB2-2 PLMN C. The figure 6 only represents the embodiment where the vehicle v1 relays the connection to the first and second networks PLMN A and b to the vehicle v2. The opposite is also possible in the invention as the vehicle v2 comprises the same components as vehicle v1 and can therefore act as the relaying or as the relayed vehicle.

In each vehicle respectively v1 and v2, the base station respectively eNB1 - 2 and eNB2-2 of the third network PLMN C is connected to the network core respectively PLMN C ePC and (not represented) of the third mobile network PLMN C. The network core ePC of the third network PLMN C is connected via a gateway to the user terminal UE1-1 or UE2-1 of the second mobile network PLMN A. As only the "relay" mode of vehicle v1 is represented, and vehicle v2 is in "relayed" mode, only the network core PLMN C ePC and therefore only the connection between the network core PLMN C ePC of vehicle v1 and the UE1-1 of the second network PLMN A of vehicle v1 is represented, but each vehicle v1 and v2 comprises at least one core network PLMN C ePC, at least one base station eNB PLMN C, and at least one user terminal UE PLMN C so as to be able to function in both relaying and relayed modes.

Each vehicle comprises switching means to switch between a first operating mode and a second operating mode. The first operating mode will be called "relaying" mode wherein a vehicle is connected to server b via the first network PLMN B backhauled by the second network PLMN A via another vehicle. The second operating mode will be called a "relayed" mode wherein the vehicle relays the connection to server b via the first network PLMN B backhauled by the second network PLMN A to another vehicle.

In the second operating mode, the "relaying" mode, in which the vehicle v1 represented at Figure 6 is operating, the user terminal UE 1-2 of the third network PLMN C of the vehicle v1 is deactivated. This means that the user terminal UE1-2 is inefficient, for example that it cannot emit nor receive signals, or at least that it cannot connect to other base stations of the third network, or at least that it does not send nor receive signals. The other components of the third network of the vehicle, namely the core network PLMN C ePC and the base station eNB1-2 PLMN C are active, meaning that they have a proper functioning. When the vehicle v2 is in "relaying" mode, it is the user terminal UE2-2 which is deactivated and the base station eNB2-2 PLMN C which is deactivated.

In the first operating mode, the "relayed" mode, in which the vehicle v2 represented at Figure 6 is operating, the user terminal UE 2-2 of the third network PLMN C of the vehicle v2 is activated, meaning that it functions properly and that it can connect to base stations of the third network PLMN C. The other components of the third network of the vehicle, namely the core network PLMN C ePC and the base station eNB1-2 PLMN C are deactivated, meaning that they do not function properly, for example the base station can not emit nor receive signals in the deactivated mode, or it does not allow user terminals to connect to it. When the vehicle v1 is in "relayed" mode, it is the user terminal UE1-2 which is activated and the base station eNB1-2 PLMN C and the PLMN C ePC which are deactivated.

When one vehicle of two vehicles is in a certain mode, the other vehicle of the two vehicles is in the other mode, so as to have one relaying vehicle and one relayed vehicle. When several vehicles are comprised in the system according to the invention, as will be described later, at least one vehicle has to be the relaying and the other vehicles can be the relayed vehicles. Several vehicles can further function in the relaying mode.

To switch between the first relayed mode and the second relaying mode, each vehicle v1 and v2 comprises switching means. The switching means enable a vehicle to switch between the relayed mode and the relaying mode by sending commands to the components that need to be activated and/or deactivated. This sending of commands can be direct, that is by directly sending a command to the component to be activated and/or deactivated or can be sent to a processor or any other component which will be in charge of activating and/or deactivating the component that needs to be switched. The switching means can be hardware means, such as a switch or a physical button or any other physical mean to send a command to components of the system to be activated and/or deactivated, or can be software means, such as a software module or a computer implemented method that is executed on a processor and which instructions are stored on a memory, the processor and the memory being for example located inside the vehicle, or being for example comprised in a mobile device such as a mobile smartphone or a laptop computer, or any other mobile device able to implement such a switching module or method.

The switching can be manual, meaning that it is performed by a user, or can be automatic, meaning that it is performed automatically depending on criterion or rules implemented in the switch method or the software module switch. Such an automatic switch can be based on a detection of loss of network connectivity of one of the two vehicles. Such a loss of network connectivity can be a loss of connectivity of user terminal UE2-1 of vehicle v2 with the core network ePC of the second network PLMN A.

As represented figure 6, the user terminal UE2-2 of the third mobile network PLMN C of vehicle v2 in relayed mode is connected to the base station eNB1-2 of the third mobile network PLMN C of the other vehicle v1 in relaying mode. This permits to form a second backhaul link between the base station eNB2-1 of the first mobile network PLMN B of the vehicle v2 in relayed mode and the core network ePC of the third mobile network PLMN C of the vehicle v1 in relaying mode, thereby enabling user terminals UE PLMN B connected to the base station eNB2-1 of the first mobile network PLMN B of the vehicle v2 in relayed mode to access the core network ePC of the first mobile network PLMN B via the first and second backhaul links, i.e. via the second backhaul network which is the third mobile network PLMN C and via the first backhaul network PLMN A.

When core networks are ePC ("evolved Packet Core"), they each comprise at least one Home Subscriber Server ("HSS") database, a Packet Data Network Gateway" ("PGW"), and Serving Gateway ("SGW") and a Mobility Management Entity ("MME"). Therefore, each vehicle v1 and v2 comprises its own core network ePC of the third network PLMN C and an HSS comprised in this PLMN C ePC. In that case, the local Home Subscriber Server is replicated or shared between the vehicles so as to have the same synchronized database for the third network PLMN C in all the vehicles.

As the invention comprises a third network PLMN C only between vehicles, the third network PLMN C can be managed by an additional core network ePC managing the third network PLMN C and the user terminal associated with it. It does not require a central core network ePC.

The invention solves the aforementioned attachment issue (4d) of user terminals to the second network PLMN A or to the first network PLMN B.

In reference to the reference point (1) of Figure 6, routing and tunnelling through the second backhaul network PLMN A can be solved in a very simple way inside the vehicles by having a local PLMN C ePC.

As shown at reference point (1) of Figure 6, the HSS of the core network ePC of the third network PLMN C manages only the third network PLMN C and user terminals belonging to said network, and thus is less critical than the HSS databases of the core network of the first PLMN B or second PLMN A networks.

The base stations eNB1-2 and eNB2-2 at reference points (4a) and (4b) of Figure 6 can be managed specifically on each vehicle v1 and v2, as the local HSS within the core network PLMN C ePC is located within each vehicle v1 and v2.

Dealing with the aforementioned issue (4c) is more simple, as the ping pong effect is irrelevant if the third network PLMN C is different than the networks PLMN A or PLMN B. No PLMN A or PLMN B can interfere with PLMN C.

In an embodiment, the user terminal UE1-2 can be removed from the local HSS of PLMN C inside the vehicle v1. This can be a configuration local to the vehicle that always disables the local modem to attach to local eNB(s). It is much easier than to manage the UE of the vehicle from the HSS of the first or second networks PLMN B or PLMN A. Based on the IMSI of the local PLMN C UE (i.e. UE1-2 or UE2-2) inside the vehicle, it is possible to disable locally that IMSI from the ePC of PLMN C. It is understood by "the user terminal is removed from the HSS" the HSS does not store information about the user terminal of the third network PLMN C or that it stores information about the user terminal of the third mobile network PLMN C with a "deactivated" database status.

In an embodiment, the eNodeB base station eNB2-2 of the third network PLMN C and the eNodeB base station eNB2-1 of the PLMN B can have the same technology or not, can be the same eNodeb base station or not, and have the same frequency or not (single cell same frequency as PLMN A). Both base stations sharing the same frequency has an interesting advantage as it permits function such as Ran sharing that can be used to direct S1-1 and S1-2 flows directly towards the core network ePC of the first network PLMN B.

In an embodiment, as a single user terminal UE can be used for both the second network PLMN A and the third network PLMN C handling at a time:
- it can be the same UE with dual SIM, for example UE2-1 and UE2-2 can be the same UE at vehicle v2;
- or It can be the same UE with single SIM, implementing a ranking of PLMNs: for example a preferred and first network is the second network PLMN A, else the third network PLMN C if available...

If only the third network PLMN C is available, the second network PLMN A is not present, and the vehicle will not accept and route other vehicles.

In an embodiment, the switching means, if requested, can also configure the radio to change from the second network PLMN A to the third network PLMN C, or the opposite, or to switch from supporting ran sharing to not supporting it.

The switching means, if requested, can also setup an additional frequency for the third network PLMN C (that is, a second cell).

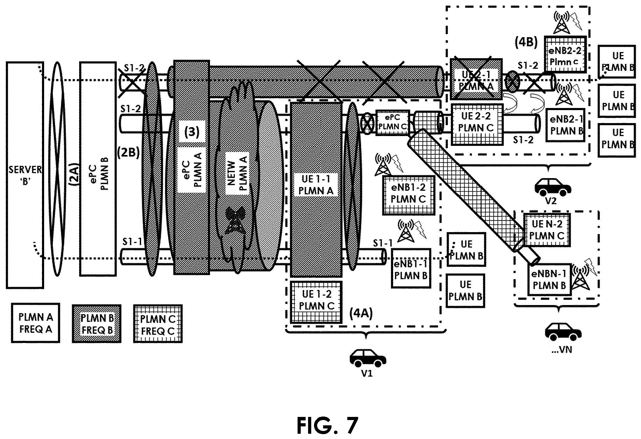

Figure 7 shows a schematic representation of a system according to the invention where a vehicle relays communication for several other vehicles.

In the system according to an embodiment of the invention represented Figure 7, several vehicles v2 and vn are backhauled by one vehicle v1. Therefore, vehicle v1 is in "relay" mode while vehicles v2 and vn are in "relayed" mode. Depending on radio capacity and spectrum available of the base station eNB1-2, this can be extended to multiple vehicles backhauled by vehicle v1. The capacity of the user terminal UE1-1 in the second network PLMN A is also a factor.

Any vehicle of vehicles v2 and vn can take the role of the vehicle v1 when the radio condition or the operation changes.

A multi-hop backhaul is not possible with the single third network PLMN C. Therefore, in an embodiment, a fourth network PLMN C' can be added to provide another hop, i.e. where vehicle v1 would provide backhaul via the third network PLMN C and a second vehicle being backhauled (or "relayed") by vehicle v1 would provide backhaul via the fourth network PLMN C' to a third vehicle. Other hops are possible by adding more vehicles and more networks to provide multi hops. This embodiment is enabled by having a different network identifier for PLMN C'.

As will be understood by the man skilled in the art, the invention is not limited to the examples provided herein. Furthermore, the examples only provide one side of the invention, that is one vehicle in a first operation mode and the other vehicle in the other operation mode. It will be understood that each vehicle embeds the components necessary to provide both operation modes, even if not represented.

## Claims

1. Wireless backhaul system comprising at least two vehicles, and:
- A first mobile network (PLMN B) comprising at least one base station (eNB1, eNB2) onboard each vehicle, at least one user terminal (UE PLMN B), and at least one network core comprising a Home Subscriber Server (ePC PLMN B), the user terminal (UE PLMN B) being connected to the base station of the first mobile network,
- A second mobile network (PLMN A) comprising at least one user terminal (UE1-1, UE2-1) onboard each vehicle, at least one base station (Netw PLMN A), and at least one network core comprising a Home Subscriber Server (ePC PLMN A),
the network cores being accessible in series, the user terminal of the second mobile network (PLMN A) being connected to the base station of the first mobile network (PLMN B), the user terminal of the second mobile network (PLMN A) being connected to the network core (ePC PLMN A) of the second mobile network (PLMN A) via the base station (Netw PLMN A) of the second mobile network (PLMN A) to form a first backhaul link between the base station of the first mobile network (PLMN B) and the network core (ePC PLMN B) of the first mobile network (PLMN B), thereby enabling the user terminal connected to the base station (eNB1, eNB2) of the first mobile network (PLMN B) to operate over the first mobile network (PLMN B), the system further comprising :
- A third mobile network (PLMN C) comprising a base station (eNB1-2 PLMN C, eNB2-1 PLMN C) onboard each vehicle, a user terminal (UE 1-2, UE 2-2) onboard each vehicle and a local network core comprising a local Home Subscriber Server (ePC PLMN C) onboard each vehicle, the base station (eNB1-2 PLMN C, eNB2-2 PLMN C) of the third mobile network (PLMN C) of a vehicle being connected to the user terminal (UE1-1, UE2-1) of the second mobile network (PLMN A) of said vehicle via the local network core (ePC PLMN C) of the third mobile network (PLMN C) of said vehicle, the local Home Subscriber Server being replicated or shared between the vehicles,
- each vehicle comprising switching means to switch between two operating modes:
- a first operating mode being a relayed mode, where the user terminal of the first mobile network of the vehicle, the base station (eNB1-2 PLMN C, eNB2-2 PLMN C) of the third mobile network (PLMN C) of the vehicle and the local network core of the third network of the vehicle are deactivated,
- a second operating mode being a relaying mode, where the user terminal of the third mobile network (PLMN C) of the vehicle is deactivated,
where the user terminal (UE1-2, UE2-2) of the third mobile network (PLMN C) of one vehicle in relayed mode of the two vehicles is connected to the base station (eNB1-2 PLMN C, eNB2-2 PLMN C) of the third mobile network (PLMN C) of the other vehicle in relaying mode of the two vehicles to form a second backhaul link between the base station of the third mobile network (PLMN C) of the vehicle in relayed mode and the network core of the second mobile network (PLMN A), thereby enabling the user terminal connected to the base station (eNB1, eNB2) of the first mobile network (PLMN B) of the other vehicle in relayed mode to access the first mobile network (PLMN B) via the first and second backhaul links.

2. Wireless backhaul system according to the preceding claim **characterized in that** the switching means are switched depending on a detection of loss of network connectivity of the user terminal of the first network of a vehicle of the two vehicles.

3. Wireless backhaul system according to any of the preceding claims **characterized in that** the switching means are a computer-implement switching method or a hardware switch with or without a human or manual procedure of assessment.

4. Wireless backhaul system according to any of the preceding claims **characterized in that** the first and second networks are chosen from 3G, 3G+, 4G or 5G, and **in that** the third network is chosen from 3G, 3G+, 4G, 5G or Wi-Fi with 3GPP authentication network.

5. Wireless backhaul system according to any of the preceding claims **characterized in that** the network core of each of the three networks further comprises a Serving Gateway, a Packet Data Network Gateway and a Mobility Management Entity.

6. Wireless backhaul system according to the preceding claim **characterized in that** the Home Subscriber Server of the local core network of the third network of a vehicle of the two vehicles is configured not to store information about the user terminal of the third mobile network of said vehicle or to store information about the user terminal of the third mobile network of said vehicle with a "deactivated" database status.

7. Wireless backhaul system according to any of the preceding claims **characterized in that** the third mobile network uses the same frequency as the first mobile network.

8. Wireless backhaul system according to the preceding claim **characterized in that** the base station of the second network accepts user terminals of the second and third networks using a ran sharing principle.

9. Wireless backhaul system according to any of the preceding claims **characterized in that** the user terminal of the first network and the user terminal of the third network are subscriber identification modules comprised in a single user terminal, the network to attach to being managed via a content of the subscriber identification modules.

10. Wireless backhaul system according to any of the preceding claims **characterized in that** the system comprises more than two vehicles and **in that** one of the vehicles is in a relaying mode and the other vehicles are in relayed mode, the communications of the user terminals of the first mobile network attached to the other vehicles being relayed by the vehicle in relaying mode.

11. Wireless backhaul system according to any of the preceding claims **characterized in that** the system comprises at least a fourth network with the same components as the third mobile network and a supplementary network identifier (PLMN C') so as to enable a between-vehicle multi-hop relaying mode.

## Patentansprüche

1. Drahtloses Backhaul-System, umfassend mindestens zwei Fahrzeuge, und:
- ein erstes Mobilfunknetz (PLMN B), umfassend mindestens eine Basisstation (eNB1, eNB2) an Bord jedes Fahrzeugs, mindestens ein Benutzerendgerät (UE PLMN B) und mindestens einen Netzkern, umfassend einen Heimatteilnehmerserver « Home Subscriber Server » (ePC PLMN B), wobei das Benutzerendgerät (UE PLMN B) mit der Basisstation des ersten Mobilfunknetzes verbunden ist,
- ein zweites Mobilfunknetz (PLMN A), umfassend mindestens ein Benutzerendgerät (UE1-1, UE2-1) an Bord jedes Fahrzeugs, mindestens eine Basisstation (Netw PLMN A) und mindestens einen Netzkern, umfassend einen Heimatteilnehmerserver « Home Subscriber Server » (ePC PLMN A),
wobei die Netzkerne in Reihe zugreifbar sind, wobei das Benutzerendgerät des zweiten Mobilfunknetzes (PLMN a) mit der Basisstation des ersten Mobilfunknetzes (PLMN B) verbunden ist, wobei das Benutzerendgerät des zweiten Mobilfunknetzes (PLMN A) mit dem Netzkern (ePC PLMN A) des zweiten Mobilfunknetzes (PLMN A) mittels der Basisstation (New PLMN A) des zweiten Mobilfunknetzes (PLMN A) verbunden ist, um eine erste Backhaul-Verknüpfung zwischen der Basisstation des ersten Mobilfunknetzes (PLMN B) und dem Netzkern (ePC PLMN B) des ersten Mobilfunknetzes (PLMN B) auszubilden, wobei dadurch das Benutzerendgerät, das mit der Basisstation (eNB1, eNB2) des ersten Mobilfunknetzes (PLMN B) verbunden ist, aktiviert wird, um über das erste Mobilfunknetz (PLMN B) in Betrieb zu sein, das System ferner umfassend:
- ein drittes Mobilfunknetz (PLMN C), umfassend eine Basisstation (eNB1-2 PLMN C, eNB2-1 PLMN C) an Bord jedes Fahrzeugs, ein Benutzerendgerät (UE 1-2, UE 2-2) an Bord jedes Fahrzeugs und einen lokalen Netzkern, umfassend einen lokalen Heimatteilnehmerserver « Home Subscriber Server » (ePC PLMN C) an Bord jedes Fahrzeugs, wobei die Basisstation (eNB1-2 PLMN C, eNB2-2 PLMN C) des dritten Mobilfunknetzes (PLMN C) eines Fahrzeugs mit dem Benutzerendgerät (UE1-1, UE2-1) des zweiten Mobilfunknetzes (PLMN-C) des Fahrzeugs mittels des lokalen Netzkerns (ePC PLMN C) des dritten Mobilfunknetzes (PLMN C) des Fahrzeugs verbunden ist, wobei der Heimatteilnehmerserver « Home Subscriber Server » zwischen den Fahrzeugen repliziert oder gemeinsam genutzt wird,
- jedes Fahrzeug umfassend Schaltmittel, um zwischen zwei Betriebsmodi umzuschalten:
- einen ersten Betriebsmodus, der ein weitergeleiteter Modus ist, wo das Benutzerendgerät des ersten Mobilfunknetzes des Fahrzeugs, die Basisstation (eNB1-2 PLMN C, eNB2-2 PLMN C) des dritten Mobilfunknetzes (PLMN C) des Fahrzeugs und der lokale Netzkern des dritten Netzes des Fahrzeugs deaktiviert werden,
- einen zweiten Betriebsmodus, der ein Weiterleitungsmodus ist, wo das Benutzerendgerät des dritten Mobilfunknetzes (PLMN C) des Fahrzeugs deaktiviert wird,
wo das Benutzerendgerät (UE1-2, UE2-2) des dritten Mobilfunknetzes (PLMN C) eines Fahrzeugs in dem weitergeleiteten Modus der zwei Fahrzeuge mit der Basisstation (eNB1-2 PLMN C, eNB2-2 PLMN C) des dritten Mobilfunknetzes (PLMN C) des anderen Fahrzeugs in dem Weiterleitungsmodus der zwei Fahrzeuge verbunden ist, um eine zweite Backhaul-Verknüpfung zwischen der Basisstation des dritten Mobilfunknetzes (PLMN C) des Fahrzeugs in dem weitergeleiteten Modus und dem Netzkern des zweiten Mobilfunknetzes (PLMN A) auszubilden, wobei dadurch das Benutzerendgerät, das mit der Basisstation (eNB1, eNB2) des ersten Mobilfunknetzes (PLMN B) des anderen Fahrzeugs in dem weitergeleiteten Modus verbunden ist, zu aktivieren, um auf das erste Mobilfunknetz (PLMN B) mittels der ersten und der zweiten Backhaul-Verknüpfung zuzugreifen.

2. Drahtloses Backhaul-System nach dem vorstehenden Anspruch,
**dadurch gekennzeichnet, dass** die Schaltmittel in Abhängigkeit von einer Erkennung eines Verlusts der Netzverbindungsfähigkeit des Benutzerendgeräts des ersten Netzes eines Fahrzeugs der zwei Fahrzeuge umgeschaltet werden.

3. Drahtloses Backhaul-System nach einem der vorstehenden Ansprüche, **dadurch gekennzeichnet, dass** die Schaltmittel ein Computerimplementierungsschaltverfahren oder ein Hardwareschalter mit oder ohne einen menschlichen oder manuellen Bewertungsvorgang sind.

4. Drahtloses Backhaul-System nach einem der vorstehenden Ansprüche, **dadurch gekennzeichnet, dass** das erste und das zweite Netz aus 3G, 3G+, 4G oder 5G ausgewählt sind und dass das dritte Netz aus 3G, 3G+, 4G, 5G oder Wi-Fi mit 3GPP-Authentifizierungsnetz ausgewählt ist.

5. Drahtloses Backhaul-System nach einem der vorstehenden Ansprüche, **dadurch gekennzeichnet, dass** der Netzkern jedes der drei Netze ferner ein Serving-Gateway, ein Paketdatennetz-Gateway und eine Mobilitätsverwaltungseinheit umfasst.

6. Drahtloses Backhaul-System nach dem vorstehenden Anspruch,
**dadurch gekennzeichnet, dass** der Heimatteilnehmerserver « Home Subscriber Server » des lokalen Kernnetzes des dritten Netzes eines Fahrzeugs der zwei Fahrzeuge konfiguriert ist, um Informationen über das Benutzerendgerät des dritten Mobilfunknetzes des Fahrzeugs nicht zu speichern oder Informationen über das Benutzerendgerät des dritten Mobilfunknetzes des Fahrzeugs mit einem "deaktivierten" Datenbankstatus zu speichern.

7. Drahtloses Backhaul-System nach einem der vorstehenden Ansprüche, **dadurch gekennzeichnet, dass** das dritte Mobilfunknetz die gleiche Frequenz wie das erste Mobilfunknetz verwendet.

8. Drahtloses Backhaul-System nach dem vorstehenden Anspruch,
**dadurch gekennzeichnet, dass** die Basisstation des zweiten Netzes Benutzerendgeräte des zweiten und dritten Netzes unter Verwendung eines Prinzips einer gemeinsamen Nutzung eines ran akzeptiert.

9. Drahtloses Backhaul-System nach einem der vorstehenden Ansprüche, **dadurch gekennzeichnet, dass** das Benutzerendgerät des ersten Netzes und das Benutzerendgerät des dritten Netzes Teilnehmeridentifizierungsmodule sind, die in einem einzigen Benutzerendgerät enthalten sind, wobei das Netzwerk mittels eines Inhalts der Teilnehmeridentifikationsmodule anzuschließen ist, um verwaltet zu werden.

10. Drahtloses Backhaul-System nach einem der vorstehenden Ansprüche, **dadurch gekennzeichnet, dass** das System mehr als zwei Fahrzeuge umfasst und dass eines der Fahrzeuge in einem Weiterleitungsmodus ist und die anderen Fahrzeuge in dem weitergeleiteten Modus sind, wobei die Kommunikationen der Benutzerendgeräte des ersten Mobilfunknetzes, die an den anderen Fahrzeugen angeschlossen sind, durch das Fahrzeug in dem Weiterleitungsmodus weitergeleitet werden.

11. Drahtloses Backhaul-System nach einem der vorstehenden Ansprüche, **dadurch gekennzeichnet, dass** das System mindestens ein viertes Netz mit den gleichen Komponenten wie das dritte Mobilnetz und einen zusätzliche Netzidentifizierer (PLMN C') umfasst, um einen Multi-Hop-Weiterleitungsmodus zwischen Fahrzeugen zu aktivieren.

## Revendications

1. Système de liaison sans fil comprenant au moins deux véhicules, et :
- Un premier réseau mobile (PLMN B) comprenant au moins une station de base (eNB1, eNB2) à bord de chaque véhicule, au moins un terminal utilisateur (UE PLMN B) et au moins un coeur de réseau comprenant un serveur d'abonné domestique « Home Subscriber Server » (ePC PLMN B), le terminal utilisateur (UE PLMN B) étant connecté à la station de base du premier réseau mobile,
- Un deuxième réseau mobile (PLMN A) comprenant au moins un terminal utilisateur (UE1-1, UE2-1) à bord de chaque véhicule, au moins une station de base (Netw PLMN A), et au moins un coeur de réseau comprenant un serveur d'abonné domestique « Home Subscriber Server » (ePC PLMN A),
les coeurs de réseau étant accessibles en série, le terminal utilisateur du deuxième réseau mobile (PLMN A) étant connecté à la station de base du premier réseau mobile (PLMN B), le terminal utilisateur du deuxième réseau mobile (PLMN A) étant connecté au coeur de réseau (ePC PLMN A) du deuxième réseau mobile (PLMN A) par l'intermédiaire de la station de base (Netw PLMN A) du deuxième réseau mobile (PLMN A) pour former une première liaison terrestre entre la station de base du premier réseau mobile (PLMN B) et le coeur de réseau (ePC PLMN B) du premier réseau mobile (PLMN B), permettant ainsi au terminal utilisateur connecté à la station de base (eNB1, eNB2) du premier réseau mobile (PLMN B) de fonctionner sur le premier réseau mobile (PLMN B), le système comprenant en outre :
- Un troisième réseau mobile (PLMN C) comprenant une station de base (eNB1-2 PLMN C, eNB 2-1 PLMN C) à bord de chaque véhicule, un terminal utilisateur (UE1-2, UE2-2) à bord de chaque véhicule et un coeur de réseau local comprenant un serveur d'abonné domestique « Home Subscriber Server » local (ePC PLMN C) à bord de chaque véhicule, la station de base (eNB1-2 PLMN C, eNB2-2 PLMN C) du troisième réseau mobile (PLMN C) d'un véhicule connecté au terminal utilisateur (UE1-1, UE2-1) du deuxième réseau mobile (PLMN A) dudit véhicule par l'intermédiaire du coeur de réseau local (ePC PLMN C) du troisième réseau mobile (PLMN C) dudit véhicule, le serveur d'abonné domestique « Home Subscriber Server » local étant répliqué ou partagé entre les véhicules,
- chaque véhicule comprenant des moyens de commutation pour commuter entre deux modes de fonctionnement :
- un premier mode de fonctionnement étant un mode relayé, où le terminal utilisateur du premier réseau mobile du véhicule, la station de base (eNB1-2 PLMN C, eNB2-2 PLMN C) du troisième réseau mobile (PLMN C) du véhicule et le coeur de réseau local du troisième réseau du véhicule sont désactivés,
- un second mode de fonctionnement étant un mode de relais, où le terminal utilisateur du troisième réseau mobile (PLMN C) du véhicule est désactivé,
où le terminal utilisateur (UE1-2, UE2-2) du troisième réseau mobile (PLM C) d'un véhicule dans le mode relayé parmi les deux véhicules est connecté à la station de base (eNB1-2 PLMN C, eNB2-2 PLMN C) du troisième réseau mobile (PLMN C) de l'autre véhicule en mode de relais parmi les deux véhicules pour former une seconde liaison terrestre entre la station de base du troisième réseau mobile (PLMN C) du véhicule en mode relayé et le coeur de réseau du deuxième réseau mobile (PLMN A), permettant ainsi au terminal utilisateur connecté à la station de base (eNB1, eNB2) du premier réseau mobile (PLMN B) de l'autre véhicule en mode relayé d'accéder au premier réseau mobile (PLMN B) par l'intermédiaire des première et seconde liaisons terrestres.

2. Système de liaison sans fil selon la revendication précédente
**caractérisé en ce que** le moyen de commutation est commuté en fonction d'une détection de perte de connectivité réseau du terminal utilisateur du premier réseau d'un véhicule parmi les deux véhicules.

3. Système de liaison sans fil selon l'une quelconque des revendications précédentes **caractérisé en ce que** le moyen de commutation est un procédé de commutation informatique ou un commutateur matériel avec ou sans procédure d'évaluation humaine ou manuelle.

4. Système de liaison sans fil selon l'une quelconque des revendications précédentes **caractérisé en ce que** les premier et deuxième réseaux sont choisis parmi 3G, 3G+, 4G ou 5G, et **en ce que** le troisième réseau est choisi parmi 3G, 3G+, 4G, 5G ou Wi-Fi avec un réseau d'authentification 3GPP.

5. Système de liaison sans fil selon l'une quelconque des revendications précédentes **caractérisé en ce que** le coeur de réseau de chacun des trois réseaux comprend en outre une passerelle de desserte, une passerelle de réseau de données de paquets et une entité de gestion de mobilité.

6. Système de liaison sans fil selon la revendication précédente **caractérisé en ce que** le serveur d'abonné domestique du coeur de réseau local du troisième réseau d'un véhicule parmi les deux véhicules est configuré pour ne pas stocker d'informations concernant le terminal utilisateur du troisième réseau mobile dudit véhicule ou stocker des informations concernant le terminal utilisateur du troisième réseau mobile dudit véhicule avec un état de base de données « désactivé ».

7. Système de liaison sans fil selon l'une quelconque des revendications précédentes **caractérisé en ce que** le troisième réseau mobile utilise la même fréquence que le premier réseau mobile.

8. Système de liaison sans fil selon la revendication précédente **caractérisé en ce que** la station de base du deuxième réseau accepte des terminaux utilisateurs des deuxième et troisième réseaux à l'aide d'un principe de partage ran.

9. Système de liaison sans fil selon l'une quelconque des revendications précédentes **caractérisé en ce que** le terminal utilisateur du premier réseau et le terminal utilisateur du troisième réseau sont des modules d'identification d'abonné compris dans un terminal utilisateur unique, le réseau à joindre pour être géré par l'intermédiaire d'un contenu des modules d'identification d'abonné.

10. Système de liaison sans fil selon l'une quelconque des revendications précédentes **caractérisé en ce que** le système comprend plus de deux véhicules et **en ce que** l'un parmi les véhicules est en mode de relais et les autres véhicules sont en mode relayé, les communications des terminaux utilisateurs du premier réseau mobile attachés aux autres véhicules étant relayées par le véhicule en mode relais.

11. Système de raccordement sans fil selon l'une quelconque des revendications précédentes **caractérisé en ce que** le système comprend au moins un quatrième réseau avec les mêmes composants que le troisième réseau mobile et un identifiant de réseau supplémentaire (PLMN C') de manière à permettre un mode de relais à plusieurs bonds entre véhicules.
